# EUROPÄISCHE PATENTSCHRIFT

(11) **EP 3 216 335 B1**
(45) Veröffentlichungstag und Bekanntmachung des Hinweises auf die Patenterteilung: **01.03.2023**
(21) Anmeldenummer: 17401021.5
(22) Anmeldetag: 02.03.2017
(51) Int. Cl.: A01C 21/00, A01B 79/00, A01C 17/00, B64C 39/02, G01P 5/00

(54) **SYSTEM UND VERFAHREN ZUR ERFASSUNG DES WINDES BEI VERTEILVORGÄNGEN**
SYSTEM AND METHOD FOR DETECTING THE WIND IN DISTRIBUTION PROCESSES
SYSTÈME ET PROCÉDÉ DE DÉTECTION DU VENT DANS DES PROCESSUS DE RÉPARTITION

(30) Priorität: 08.03.2016 DE 102016104144
(43) Veröffentlichungstag der Anmeldung: 13.09.2017
(73) Patentinhaber: Amazonen-Werke H. Dreyer SE & Co. KG, 49205 Hasbergen (DE)
(72) Erfinder: Wild, Karl, 01454 Ullersdorf (DE)

(56) Entgegenhaltungen:
- DE-B3-102013 019 098
- US-B1- 8 849 523

## Beschreibung

Die Erfindung betrifft ein System und ein Verfahren zur Erfassung des Windes bei Verteilvorgängen.

Ein derartiges System und ein derartiges Verfahren sind in EP2556738A1 beschrieben. Zu verteilendes Gut, wie beispielsweise Mineraldünger, wird in vorgebbaren Verteilungen auf landwirtschaftlichen Nutzflächen ausgebracht. Dazu wird das Streugut in einstellbaren Mengen auf die in veränderbarer Weise ansteuerbaren Schleuderscheiben eines Zentrifugaldüngerstreuers gegeben. Die Einstellung der Mengen geschieht mittels Dosierorganen, die über Aktoren steuerbar sind. Die Ansteuerung der Dosierorgane und der Antriebselemente der Schleuderscheiben erfolgt über einen Steuercomputer, in dem die physikalischen Eigenschaften der Streugutpartikel hinterlegt sind. Diese relativ kleinen und leichten Streugutpartikel unterliegen bei der Ausbringung auf landwirtschaftlichen Nutzflächen dem Einfluss des vorherrschenden Windes. Wind sorgt Luv-seitig für ein Abbremsen der Streugutpartikel und damit für eine Verringerung der Wurfweite, Lee-seitig gleichzeitig für eine Erhöhung der Wurfweite, da die Partikel windgestützt weiter getragen werden. Vor allem wechselhafte oder böige Windverhältnisse können auf diese Weise sowohl exaktes Grenzstreuen, als auch eine gleichmäßige Bedeckung der landwirtschaftlichen Nutzfläche mit dem auszubringenden Streugut erheblich stören. Im Stand der Technik wird dieses Problem gelöst, indem auf der Arbeitsmaschine Sensoren zur Winderfassung angebracht werden, deren Messwerte dem Steuercomputer für die Ansteuerung der Dosierorgane und der Antriebselemente der Schleuderscheiben zugeführt werden. So werden die Betriebsparameter des Zentrifugaldüngerstreuers in geeigneter Weise angepasst, um den Windeinfluss auszugleichen. Dies stellt aber nur eine Reaktion auf aktuelle Windverhältnisse dar, welche immer nur eine zeitversetzte Anpassung der Betriebsparameter ermöglicht. Die geschilderten Störungen werden dadurch nur unzureichend behoben.

Die US 8 849 523 B1 befasst sich mit einem System zur Erfassung von Umgebungsparametern, um die Wachstumsbedingungen von landwirtschaftlichen Nutzpflanzen zu optimieren. Zu diesem Zweck kann ein unbemanntes Fluggerät eingesetzt werden. Um beispielsweise zu ermitteln, wohin bei windigen Wetterverhältnissen versprühte Pflanzenschutzmittel geweht werden, ist dabei eine Sensorik vorgesehen, welche die Windverhältnisse erfassen kann. Insbesondere werden dazu die Windrichtung oder -geschwindigkeit erfasst.

Der Erfindung liegt daher die Aufgabe zugrunde, ein System und Verfahren zu schaffen, welches eine Echtzeit-Anpassung der Betriebsparameter einer landwirtschaftlichen Arbeitsmaschine an die vorherrschenden Windverhältnisse ermöglicht.

Diese Aufgabe wird erfindungsgemäß durch die Merkmale des Anspruchs 1 und 11 gelöst. Durch den Einsatz eines unbemannten Luftfahrzeugs (ULF) werden die Windverhältnisse über einer zu bearbeitenden landwirtschaftlichen Nutzfläche mithilfe der Erfassung von Windindikatoren bzw. mithilfe von Sensoren zur Erfassung von Windgeschwindigkeit(en) und/oder -richtung(en) rechtzeitig erfasst. Durch DE102013019098B3 sind unbemannte Luftfahrzeuge (ULF) bekannt. Derartige unbemannte Luftfahrzeuge sind vorzugsweise senkrecht start- und landefähig, sodass ihre Start- und Landevorrichtung auch an einem Bodenfahrzeug angeordnet werden kann. Dieses Bodenfahrzeug kann beispielsweise eine landwirtschaftliche Arbeitskombination, insbesondere bestehend aus Zugmaschine und Arbeitsmaschine, sein. Die unbemannten Luftfahrzeuge weisen eine nachfüllbare oder austauschbare Energiespeichereinheit und eine Funktionseinheit zur Erfassung von Parametern der Umwelt und Umgebung auf. Diese erfassten Parameter von Umwelt und Umgebung sind drahtlos an eine Steuerungseinrichtung der Start- bzw. Landevorrichtung und/oder des Bodenfahrzeugs übertragbar. Mithilfe einer Steuereinheit der Start- bzw. Landevorrichtung bzw. des Bodenfahrzeugs ist die autonome Bewegung des unbemannten Luftfahrzeugs steuerbar.

Vorteilhaft ist die Verwendung von senkrecht start- und landefähigen unbemannten Luftfahrzeugen, da sie keine Start- und Landebahnen oder Abschussvorrichtungen benötigen und somit nur geringe Anforderungen an eine Start- und Landevorrichtung stellen. Durch den Verzicht auf Tragflächen sind sie kompakt gebaut, sodass eine Start- und Landeplattform mobil am Feldrand aufgebaut der auf der landwirtschaftlichen Arbeitsmaschine oder deren Zugmaschine angeordnet sein kann.

Die Verwendung von Multicoptern erlaubt das Fliegen bei niedrigen Geschwindigkeiten, die auf die Arbeitsgeschwindigkeit der Arbeitsmaschine abgestimmt werden können. Die Bewegung des unbemannten Luftfahrzeugs kann entweder autonom, computergesteuert oder ferngesteuert durch den Fahrzeugführer der Zugmaschine oder einen weiteren Bediener erfolgen. Dabei wird ein autonomes Agieren bevorzugt, weil es den notwendigen Arbeitsaufwand reduziert.

Durch die Verwendung unbemannter Luftfahrzeuge wird die Grundvoraussetzung für das erfindungsgemäß rechtzeitige Erfassen der Windverhältnisse und die daraus resultierende früh- und rechtzeitige Anpassung der die Ausbringung steuernden Betriebsparameter der landwirtschaftlichen Arbeitsmaschine geschaffen. Diese früh- und rechtzeitige Anpassung der Betriebsparameter ermöglicht eine Echtzeit-Anpassung.

Eine Echtzeit-Anpassung der Betriebsparameter der landwirtschaftlichen Arbeitsmaschine auf die zum Zeitpunkt der Ausbringung am Ort der Arbeitsmaschine vorherrschenden Windverhältnisse ist besonders vorteilhaft. Dazu müssen die vorherrschenden Windverhältnisse über einer Position bekannt sein, bevor die Arbeitsmaschine diese Position erreicht (präventive Erfassung). Dies wird erreicht, indem das unbemannte Luftfahrzeug die Windverhältnisse auf der Luv-Seite der aktuellen und/oder zukünftigen Fahrspur und/oder der landwirtschaftlichen Arbeitsmaschine erfasst.

Sind Windgeschwindigkeit(en) und -richtung(en) erfasst, kann auf Basis dieser Messwerte bei bekannter Bewegungsrichtung und -geschwindigkeit der Arbeitsmaschine berechnet werden, welche Windverhältnisse an der nächsten Position der Arbeitsmaschine vorherrschen werden.

Es wird bei der Luv-seitigen Erfassung der Windverhältnisse bevorzugt, dass das die Windverhältnisse erfassende unbemannte Luftfahrzeug zumindest überwiegend auf der Luv-Seite der aktuellen und/oder zukünftigen Fahrspur und/oder der landwirtschaftlichen Arbeitsmaschine eingesetzt wird. Dadurch ist die Nutzung geeigneter Sensoren zur direkten Erfassung von Windrichtung(en) und - geschwindigkeit(en), beispielsweise eines Anemometer, möglich.

Die Nutzung von Windindikatoren zur Erfassung der Windverhältnisse geschieht mittels geeigneter Sensoren, beispielsweise Radar, Laserscanner oder Kamera mitsamt geeigneter Bildauswertung, zur Erfassung der Relativbewegungen der Windindikatoren. Durch den Luv-seitigen Einsatz des unbemannten Luftfahrzeugs befinden sich die zu erfassenden Windindikatoren näher an dem unbemannten Luftfahrzeug, sodass sie leichter zu erfassen und für die Sensoren besser aufzulösen sind. Dadurch wird die Erfassungsqualität erhöht.

Damit während des Verteilvorgangs stets zum Verteilzeitpunkt an der Verteilposition die aktuellen Windverhältnisse bekannt sind, ist es vorteilhaft, dass die Windverhältnisse zumindest für einen Teil der zu bearbeitenden Fläche vor und/oder während des Bearbeitungsvorgangs erfasst werden. So können die Betriebsparameter der Arbeitsmaschine abschnittsweise aktuell auf die Windverhältnisse angepasst werden, die zum Verteilzeitpunkt an der Verteilposition vorherrschen werden.

Durch beispielsweise das Zusammensetzen der erfassten und gespeicherten Windverhältnisse über den einzelnen Abschnitten der bearbeiteten und/oder zu bearbeitenden Fläche, ist es möglich, eine Windkarte der Windverhältnisse über der zu bearbeitenden Fläche erstellt wird. Diese Windkarte kann gespeichert werden und mit weiteren Windkarten Basis für beispielsweise statistische Auswertungen hinsichtlich der Windverhältnisse dienen.

Eine Verbesserung der Qualität der Windkarte wird durch eine großflächige Erfassung der Windverhältnisse erreicht. Dazu werden mittels geeigneter Sensorik durch das unbemannte Luftfahrzeug die Relativbewegungen von Windindikatoren auf dem Feld abschnittweise über der zu bearbeitenden Fläche erfasst.

Besonders vorteilhaft bei der Erfassung der Windverhältnisse mittels Windindikatoren ist es, wenn die Windindikatoren als Referenzobjekte oder Partikelwolken ausgebildet sind. Als Referenzobjekte können insbesondere die Feldpflanzen und/oder Teile der Pflanzen auf der zu bearbeitenden Fläche selbst dienen. Bei ausreichender Pflanzenhöhe verursacht das Streichen des Windes über diese Pflanzen charakteristische Muster und Bewegungen, die mit geeigneten Sensoren erfasst und aus denen auftretende Windböen abgeleitet werden können. Zur sicheren Erfassung dieser Muster und Pflanzenbewegungen ist es von Vorteil, wenn das unbemannte Luftfahrzeug Luv-seitig der Arbeitsmaschine eingesetzt wird, damit die Windverhältnisse erfasst werden, bevor sie die Arbeitsmaschine erreichen.

Zusätzliche Informationen können, auch über größere Entfernungen den windbeeinflussten Bewegungen von beispielsweise Objekten und/oder Gewächsen und/oder Teilen von Gewächsen am Feldrand und/oder Gewässeroberflächen in der Umgebung entnommen werden. Ebenso ist der Einsatz mehrerer unbemannter Luftfahrzeuge denkbar.

Es ist vorteilhaft, dass das die Windverhältnisse erfassende unbemannte Luftfahrzeug (ULF) auf der Lee-Seite der landwirtschaftlichen Arbeitsmaschine eingesetzt wird, wenn ein Einsatz auf der Luv-Seite nicht möglich ist. Dieser Fall tritt beispielsweise ein bei fehlenden Überflugsrechten Luv-seitig benachbarter Ländereien oder Luv-seitigen Hindernissen.

Auch beim Lee-seitigen Einsatz des die Windverhältnisse erfassenden unbemannten Luftfahrzeugs werden die Luv-seitigen Windverhältnisse, beispielsweise durch die Verwendung von Windindikatoren, erfasst. Dadurch wird weiterhin die Echtzeit-Anpassung auf die zu erwartenden Windverhältnisse zum Verteilzeitpunkt am Verteilort ermöglicht. Dazu wird eine entsprechend leistungsfähige Sensorik vorausgesetzt, denn die Erfassungsqualität wird in diesem Fall durch das Sensorsystem begrenzt. Bei steigender Qualität kann der Abstand zum relevanten Luv-seitigen Erfassungsbereich steigen. Es ist dann sogar denkbar, das unbemannte Luftfahrzeug in erfindungsgemäßer Weise auf der Lee-Seite der Arbeitsmaschine einzusetzen, solange nur die Windverhältnisse auf der Luv-Seite erfasst werden.

Es ist vorteilhaft, die durch den Fahrtwind der Eigenbewegung des ULF verursachte Verfälschung der Messwerte der Windverhältnisse auf Basis der bekannten Bewegungsrichtung und -geschwindigkeit korrigiert wird. Dadurch werden der Anpassung der Betriebsparameter der Arbeitsmaschine die korrekten Werte für Windgeschwindigkeit(en) und -richtung(en) zugrunde gelegt.

Stehen keine geeigneten, natürlichen Referenzobjekte als Windindikatoren zur Verfügung, können künstlich Referenzobjekte ausgebracht werden. Dazu können künstliche Windindikatoren, beispielsweise Rauch- oder Nebelerzeuger, genutzt und/oder transportable Windmesssysteme aufgestellt werden. Das Ausbringen und/oder Positionieren der künstlichen Windindikatoren und/oder transportablen Windmesssysteme kann durch den Bediener oder durch das unbemannte Luftfahrzeug geschehen. Partikelwolken und/oder Nebel können an geeigneten Stellen künstlich generiert werden. Deren Bewegung und Verteilung geben nach Erfassung Aufschluss über die vorherrschenden Windverhältnisse. Zum anderen eignen sich beispielsweise Windfahnen, deren Bewegungen ähnlich denen der Pflanzen analysiert werden, ebenso wie transportable Windmesssysteme, beispielsweise Anemometer, die zusätzliche Daten beispielsweise vom Feldrand liefern.

Bei Nutzung künstlicher Windmesssysteme oder Windindikatoren ist es von Vorteil, wenn die künstlichen Windindikatoren oder transportablen Windmesssysteme manuell durch einen Bediener oder durch das unbemannte Luftfahrzeug ausgebracht und/oder positioniert werden. So können sie manuell oder automatisiert an besonders geeigneten Stellen positioniert werden. Das automatisierte Aufstellen bewirkt eine erhebliche Zeitersparnis.

Fliegt das unbemannte Luftfahrzeug der landwirtschaftlichen Arbeitsmaschine voraus, ist es vorteilhaft, dass bei länger werdender Strecke, die das unbemannte Luftfahrzeug der landwirtschaftlichen Arbeitsmaschine vorausfliegt, der Abstand der Flugbahn des unbemannten Luftfahrzeugs zur aktuellen und/oder zukünftigen Fahrspur der landwirtschaftlichen Arbeitsmaschine vergrößert wird. Dies ist vorteilhaft, weil sich mit länger werdender vorausgeflogener Strecke auch die Zeitspanne verlängert, die die Arbeitsmaschine bei konstanter Arbeitsgeschwindigkeit benötigt, bis sie an der vom unbemannten Luftfahrzeugs erfassten und ausgewerteten Position ankommen wird. Somit müssen auch die Windverhältnisse in einem entsprechend größeren Abstand zur aktuellen und/oder zukünftigen Fahrspur ermittelt werden, da bei einer endlichen Windgeschwindigkeit(en) dieser vergrößerte Abstand der verlängerten Zeitspanne entspricht.

Vorteilhaft lässt sich das vorgeschlagene Verfahren mit einem System durchführen, bei welchem zumindest ein mit der landwirtschaftlichen Arbeitsmaschine kommunizierendes unbemanntes Luftfahrzeug (ULF) mit Sensoren zur Erfassung von zumindest der Relativbewegung von Windindikatoren und/oder Windgeschwindigkeit(en) und/oder -richtung(en) ausgestattet ist. Dadurch kann das unbemannte Luftfahrzeug die erforderlichen Daten an geeigneten Positionen in der Umgebung der landwirtschaftlichen Arbeitsmaschine sammeln. Dies kann durch den Führer der Arbeitsmaschine oder einen anderen Bediener ferngesteuert oder vollständig autonom geschehen.

Besonders vorteilhaft ist dabei, dass das unbemannte Luftfahrzeug (ULF) auf der landwirtschaftlichen Arbeitsmaschine start- und landefähig ist. Somit kann es stets mitgeführt und eingesetzt werden, ohne dass besondere Voraussetzungen an die Start- bzw. Landevorrichtung gestellt werden.

Für den autonomen Einsatz ist es vorteilhaft, dass die Kommunikation zwischen unbemanntem Luftfahrzeug und Basisstation und/oder landwirtschaftlicher Arbeitsmaschine drahtlos erfolgt. Auf diese Weise werden ohne Einschränkung der Bewegungsfreiheit des unbemannten Luftfahrzeugs beispielsweise durch Kabel Steuerbefehle zwischen der Basisstation und/oder der landwirtschaftlichen Arbeitsmaschine und dem unbemannte Luftfahrzeug ausgetauscht. Zudem werden die vom unbemannten Luftfahrzeug ermittelten Messdaten der Basisstation und/oder der landwirtschaftlichen Arbeitsmaschine zugeführt.

Für einen längere Zeit andauernden Einsatz ist es besonders vorteilhaft, dass das unbemannte Luftfahrzeug eine wieder auffüllbare und/oder austauschbare Energiespeichereinheit aufweist. Bei uneingeschränkter Bewegungsfreiheit ist eine Fortführung der Arbeit nach lediglich kurzer Unterbrechung zum Auffüllen bzw. Austauschen der Energiespeichereinheit möglich.

Weitere Einzelheiten und vorteilhafte Ausführungsformen der Erfindung sind der Beispielsbeschreibung und den Zeichnungen zu entnehmen. Die Zeichnungen zeigen
- Fig.1: die Bearbeitung einer landwirtschaftlichen Nutzfläche mit einer landwirtschaftlichen Arbeitsmaschine in Begleitung eines unbemannten Luftfahrzeugs in Prinzipdarstellung, wobei nur ein Teilbereich der Nutzfläche dargestellt ist,
- Fig.2: die landwirtschaftliche Arbeitskombination aus Zentrifugaldüngerstreuer und Zugmaschine mit einer Start- und/oder Landevorrichtung für senkrecht start- und landefähige unbemannte Luftfahrzeuge und einem solchen unbemanntem Luftfahrzeug in Seitenansicht,
- Fig.3: die landwirtschaftliche Arbeitskombination in Begleitung eines Luv-seitig fliegenden und Luv-seitig die Windverhältnisse erfassenden unbemannten Luftfahrzeugs in Ansicht von vorne und
- Fig.4: die landwirtschaftliche Arbeitskombination in Begleitung eines Lee-seitig fliegenden und Luv-seitig die Windverhältnisse erfassenden unbemannten Luftfahrzeugs in Ansicht von vorne.

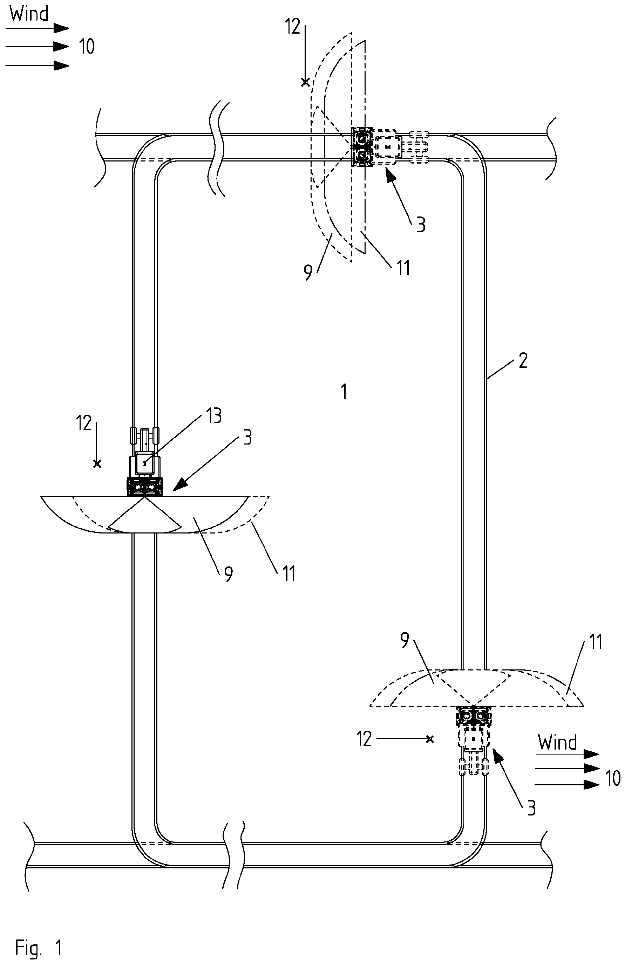

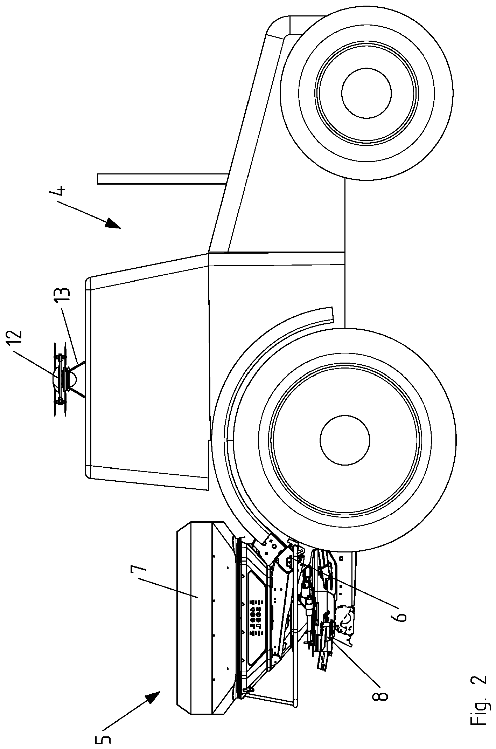

Auf einer in Fig. 1 teilweise dargestellten Nutzfläche 1 sind beispielsweise von einem elektronisch basierten Managementsystem in bekannter und daher nicht näher erläuterter Art Weise Fahrspuren 2 für weitere Bearbeitungsschritte der Nutzfläche 1 angelegt worden. In diesen Fahrgassen 2 bewegt sich eine landwirtschaftliche Arbeitskombination 3, bestehend aus einer landwirtschaftlichen Zugmaschine 4 und einer Arbeitsmaschine 5, die im gewählten Beispiel als angebauter Zentrifugaldüngerstreuer ausgebildet ist, wie in Fig. 2 dargestellt ist.

Die Arbeitsmaschine 5 ist mittels an ihrem Rahmen 6 angeordneten Kupplungselementen an einem Dreipunktkraftheber der Zugmaschine 4 angebaut. Die Arbeitsmaschine 5 weist einen Vorratsbehälter 7 zur Bevorratung des zu verteilenden Streugutes, wie Dünger, auf, welches beim Verteilvorgang über der zu bearbeitenden landwirtschaftlichen Nutzfläche 1 mittels Dosierorganen in einstellbaren Mengen auf in veränderbarer Weise ansteuerbare Schleuderscheiben 8 gegeben wird. Die Schleuderscheiben 8 werfen das zu verteilende Streugut breitwürfig nach hinten und zu beiden Seiten in bekannter Weise ab, wobei sich ein Streufächer 9 in dreidimensionaler Weise ausbildet.

Die Flugbahn der abgeworfenen, leichten Streugutpartikel wird in ihrer Richtung und ihrer Wurfweite durch den vorherrschenden Wind 10 beeinflusst. Diese Beeinflussung führt zu einem veränderten Streufächer 11. Die Stärke des die Flugbahn der Streugutpartikel beeinflussenden Windes 10 wird durch eine von einem unbemannten Luftfahrzeug getragene Windmessvorrichtung 12 ermittelt, welches in den gewählten Ausführungsbeispielen der Fig. 1 bis 4 als senkrecht start- und landefähiger Quadcopter ausgebildet ist. Wenn im Folgenden von dem unbemannten Luftfahrzeug gesprochen wird, ist auch die Windmessvorrichtung mit eingeschlossen.

Die Start- und Landevorrichtung 13 des unbemannten Luftfahrzeugs 12 ist an geeigneter Stelle der landwirtschaftlichen Arbeitskombination 3 angeordnet, im gewählten Ausführungsbeispiel auf dem Dach der Kabine der Zugmaschine 4, wie in Fig. 2 gezeigt. Von dieser Start- und Landevorrichtung 13 startet das unbemannte Luftfahrzeug 12 und ist mit austauschbaren und/oder auffüllbaren Energiespeichereinheiten sowie mit Vorrichtungen zur drahtlosen Kommunikation mit der Basisstation und/oder landwirtschaftlichen Zugmaschine 4 und/oder Arbeitsmaschine 5 ausgestattet. Das unbemannte Luftfahrzeug 12 weist wenigstens eine als Windmessvorrichtung bezeichnete Einheit zur Erfassung von Umgebungsparametern auf, im gewählten Beispiel geeignete Sensoren zur Erfassung von zumindest der Windgeschwindigkeit(en) und der Richtung(en) des Windes.

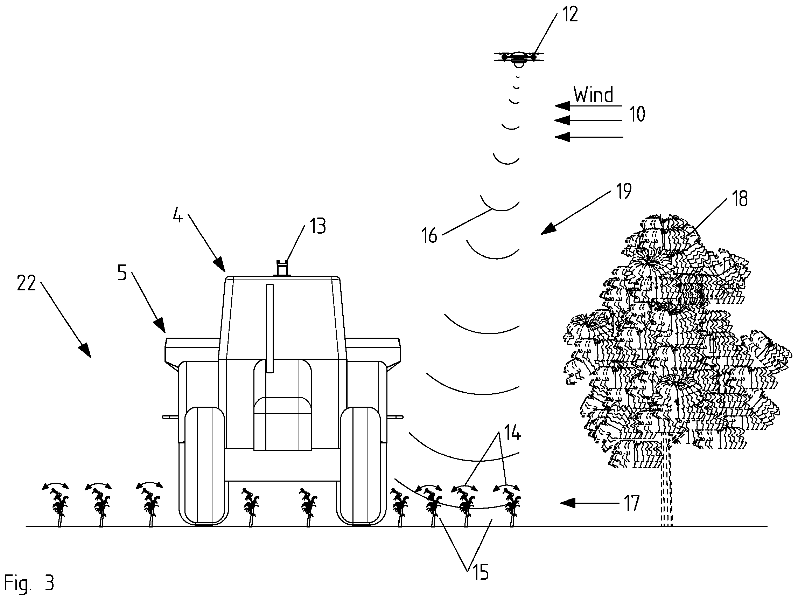

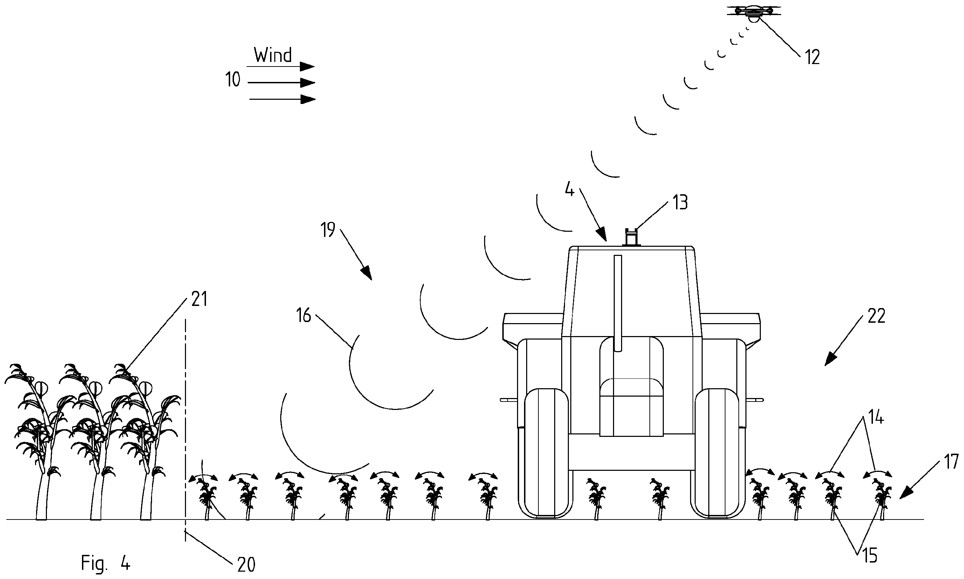

Das unbemannte Luftfahrzeug 12 bewegt sich während des Verteilvorganges des zu verteilenden Streugutes über der landwirtschaftlichen Nutzfläche 1 im Luftraum im Wesentlichen über der landwirtschaftlichen Nutzfläche 1 in der Nähe der landwirtschaftlichen Arbeitsmaschine 5 und/oder der aktuellen oder zukünftigen Fahrspur 2 der landwirtschaftlichen Arbeitsmaschine 5. Dabei werden mit geeigneten Sensoren die Geschwindigkeit(en) und Richtung(en) des Windes 10 über der zu bearbeitenden Nutzfläche 1 ermittelt. Diese Ermittlung geschieht über die direkte Erfassung von Windgeschwindigkeit(en) und -richtung(en) beispielsweise mittels Anemometer oder bevorzugterweise über die in Fig. 3 und 4 dargestellte Erfassung der Relativbewegungen 14 von Windindikatoren 15, bevorzugt mittels der Signale 16 eines Laserscanner, Radarscanner oder Kamera mitsamt geeigneter Bildauswertung. Im ausgewählten Ausführungsbeispiel nach den Fig. 3 und 4 sind die heranwachsenden Feldpflanzen 17 selbst Windindikatoren 15. Ebenso ist möglich, dass als Windindikatoren 15 Referenzobjekte beispielsweise am Feldrand heran gezogen werden. Dazu eignen sich beispielsweise Gewächse 18, wie Sträucher oder Bäume, die in Fig. 3 in strichpunktierter Weise angedeutet sind oder sich im Wind 10 bewegende Teile dieser Gewächse 18, wie Äste oder Laubwerk. Ebenso kann die windbeeinflusste Bewegung von Gewässeroberflächen genutzt werden.

Das Überstreichen des Windes 10 von natürlichen Elementen, wie beispielsweise Feldpflanzen 17 oder Gewächsen 18 verursacht charakteristische Muster und Bewegungen, die mit geeigneten Sensoren erfasst und aus denen auftretende Windböen abgeleitet werden können.

Stehen keine geeigneten natürlichen Windindikatoren 15 zur Verfügung, können in den Figuren nicht dargestellte künstliche Windindikatoren 15 im Bereich der zu bearbeitenden Fläche ausgebracht werden. Als künstliche Windindikatoren können Nebel oder Partikelwolken dienen, die an geeigneten Stellen freigesetzt werden und deren Verteilung und/oder Bewegungen Rückschlüsse auf die Windverhältnisse 10 zulassen. Ebenso ist eine Verwendung von Windfahnen als Windindikatoren 15 denkbar, deren Bewegungen sich analog zu denen der Feldpflanzen 17 auswerten lassen. Auch mobile Winderfassungssysteme können an geeigneter Stelle verwendet werden.

Das Ausbringen und/oder Aufstellen von mobilen Winderfassungssystemen oder künstlichen Windindikatoren kann entweder von dem unbemannten Luftfahrzeug 12 selbst, vom Führer der Arbeitsmaschine 5 oder einem weiteren Bediener übernommen werden.

Für die Berücksichtigung der Windverhältnisse 10 für eine Echtzeit-Anpassung der Betriebsparameter der landwirtschaftlichen Arbeitsmaschine 5 ist die Ermittlung der Windverhältnisse 10 präventiv für den Abschnitt der zu bearbeitenden landwirtschaftlichen Nutzfläche 1 notwendig, auf welchem sich die Arbeitsmaschine 5 als nächstes zur Ausbringung des Streugutes befinden wird. Dazu werden die Windverhältnisse 10 auf der Luv-Seite 19 der Arbeitsmaschine 5 und/oder der aktuellen und/oder zukünftigen Fahrspur 2 der Arbeitsmaschine 5 bestimmt. Zu diesem Zweck wird das unbemannte Luftfahrzeug 12 auf der Luv-Seite 19 eingesetzt, wie Fig. 3 zeigt. Durch die Bewegung des Windes 10 auf die Arbeitsmaschine 5 zu und durch die Bewegung der Verteilmaschine 5 entlang ihrer Fahrspur 2 werden nach Erfassung aus den präventiv ermittelten Messwerten von Windgeschwindigkeiten) und -richtung(en) nach deren Korrektur bezüglich der Eigenbewegung des unbemannten Luftfahrzeugs 12 die aktuellen Werte von Windgeschwindigkeiten) und -richtung(en) für den aktuellen Ort der Streugutausbringung vorausberechnet.

Die für einen Verteilort zu einer Verteilzeit vorausberechneten aktuellen Windverhältnisse 10 werden vom unbemannten Luftfahrzeug 12 drahtlos an die Basisstation, die Zugmaschine 4 oder die Arbeitsmaschine 5 übermittelt. Von dort werden die Daten an die datenverarbeitende Elektronik der landwirtschaftlichen Arbeitsmaschine 5 zur Weiterverarbeitung weitergeleitet. Die Betriebsparameter der Arbeitsmaschine 5 werden präventiv an die vorausberechneten Windverhältnisse 10 am Verteilort zur Verteilzeit angepasst, sodass beim Verteilvorgang stets die aktuellen Windverhältnisse 10 berücksichtigt werden und ein optimales, gleichmäßiges Streubild gewährleistet wird. Die Anpassung der Betriebsparameter der Arbeitsmaschine 5 geschieht beispielsweise über eine Regelung der mittels Dosierorganen einstellbaren Streugutmengen, eine Regelung der in veränderbarer Weise ansteuerbaren Schleuderscheiben 8 und/oder eine Regelung der Abwurfeigenschaften der Schleuderscheiben 8. Die Regelung auf Basis der ermittelten Windverhältnisse 10 erfolgt über einen Steuercomputer beispielsweise anhand in einer Speichereinheit hinterlegter Algorithmen und/oder physikalischer Eigenschaften der Streugutpartikel und/oder hinterlegter Betriebsparameter der Arbeitsmaschine 5 zum Erreichen eines optimalen Streubildes.

Kann das unbemannte Luftfahrzeug 12 aufgrund fehlender Überflugrechte jenseits einer Feldgrenze 20 oder wegen Kollisionsgefahr beispielsweise aufgrund des Bewuchses 21 nicht auf der Luv-Seite 19 der Arbeitsmaschine 5 und/oder deren Fahrspur 2 eingesetzt werden, wird das unbemannte Luftfahrzeug 12 auf der Lee-Seite 22 der Arbeitsmaschine 5 und/oder der aktuellen und/oder zukünftigen Fahrspur 2 eingesetzt, wie es Fig. 4 zeigt. Für die bevorzugte präventive Ermittlung von Richtung(en) und Geschwindigkeit(en) des Windes 10 werden auch im Falle des Lee-seitigen 22 Einsatzes des unbemannten Luftfahrzeugs 12 die Relativbewegungen 14 der Windindikatoren 15 auf der Luv-Seite 19 der Arbeitsmaschine 5 und/oder der Fahrspur 2 der Arbeitsmaschine 5 erfasst, gezeigt in Fig. 4.

Durch die vorgeschlagene Methode werden die Windverhältnisse 10 über einer zu bearbeitenden landwirtschaftlichen Nutzfläche 1 abschnittsweise ermittelt. Durch Ablegen der ermittelten Daten in einen Datenspeicher des unbemannten Luftfahrzeugs 12, der Basisstation, der Arbeitsmaschine 5 oder der Zugmaschine 4 kann durch Zusammensetzten der einzelnen Datensätze eine Karte der Windverhältnisse 10 über der gesamten bearbeiteten Nutzfläche 1 erstellt werden.

## Patentansprüche

1. Verfahren zur Erfassung des Windes (10) bei Verteilvorgängen in der Landwirtschaft durch eine Erfassungsvorrichtung wenigstens eines vorzugsweise im Wesentlichen senkrecht start- und landefähiges, vorzugsweise autonom agierenden, unbemannten Luftfahrzeugs (ULF) (12), **dadurch gekennzeichnet, dass** das unbemannte Luftfahrzeug (ULF) (12) wenigstens eine Einheit zur Erfassung von Windverhältnissen (10) aufweist, welches eine Einheit zum Empfangen von Steuersignalen von einer Basisstation und/oder Senden von Steuersignalen an ein landwirtschaftliches Arbeitsgerät (5) und eine Einheit zur Übermittlung der erfassten Windverhältnisse (10) an eine Basisstation und/oder an ein landwirtschaftliches Arbeitsgerät (5) aufweist, wobei die Windverhältnisse (10) über einer zu bearbeitenden Fläche (1) mithilfe der Erfassung von Windindikatoren (15) und/oder geeigneten Sensoren zur Erfassung von Windgeschwindigkeit(en) und/oder -richtung(en) erfasst werden wobei das unbemannte Luftfahrzeug (12) die Windverhältnisse (10) auf der Luv-Seite (19) der aktuellen und/oder zukünftigen Fahrspur (2) und/oder der landwirtschaftlichen Arbeitsmaschine (5) erfasst; und dass Betriebsparameter der landwirtschaftlichen Arbeitsmaschine (5) auf die zum Zeitpunkt der Ausbringung am Ort der landwirtschaftlichen Arbeitsmaschine (5) vorherrschenden Windverhältnisse angepasst werden, auf Basis der vom unbemannten Luftfahrzeug erfassten Windverhältnisse.

2. Verfahren zur Erfassung des Windes (10) nach Anspruch 1, **dadurch gekennzeichnet, dass** das die Windverhältnisse (10) erfassende unbemannte Luftfahrzeug (12) zumindest überwiegend auf der Luv-Seite (19) der aktuellen und/oder zukünftigen Fahrspur (2) und/oder der landwirtschaftlichen Arbeitsmaschine (5) eingesetzt wird.

3. Verfahren zur Erfassung des Windes (10) nach den Ansprüchen 1 oder 2, **dadurch gekennzeichnet, dass** die Windverhältnisse (10) zumindest für einen Teil der zu bearbeitenden Fläche (1) vor und/oder während des Bearbeitungsvorgangs erfasst werden.

4. Verfahren zur Erfassung des Windes (10) nach zumindest einem der Ansprüche 1 bis 3, **dadurch gekennzeichnet, dass** eine Windkarte der Windverhältnisse (10) über der zu bearbeitenden Fläche (1) erstellt wird.

5. Verfahren zur Erfassung des Windes (10) nach zumindest einem der Ansprüche 1 bis 4, **dadurch gekennzeichnet, dass** die Windindikatoren (15) als Referenzobjekte oder Partikelwolken ausgebildet sind.

6. Verfahren nach zumindest einem der vorstehenden Ansprüche, **dadurch gekennzeichnet, dass** das die Windverhältnisse (10) erfassende unbemannte Luftfahrzeug (ULF) (12) auf der Lee-Seite (20) der landwirtschaftlichen Arbeitsmaschine (5) eingesetzt wird, wenn ein Einsatz auf der Luv-Seite (19) nicht möglich ist.

7. Verfahren nach zumindest einem der vorstehenden Ansprüche, **dadurch gekennzeichnet, dass** die durch den Fahrtwind der Eigenbewegung des ULF (12) verursachte Verfälschung der Messwerte der Windverhältnisse auf Basis der bekannten Bewegungsrichtung und - geschwindigkeit korrigiert wird.

8. Verfahren nach zumindest einem der vorstehenden Ansprüche, **dadurch gekennzeichnet, dass** künstliche Windindikatoren (15), beispielsweise Rauch- oder Nebelerzeuger, genutzt und/oder transportable Windmesssysteme aufgestellt werden.

9. Verfahren nach Anspruch 8, **dadurch gekennzeichnet, dass** die künstlichen Windindikatoren (15) oder transportablen Windmesssysteme durch das unbemannte Luftfahrzeug (12) ausgebracht und/oder positioniert werden.

10. Verfahren nach zumindest einem der Ansprüche 1 bis 8, **dadurch gekennzeichnet, dass** bei steigender Strecke, die das unbemannte Luftfahrzeug (12) der landwirtschaftlichen Arbeitsmaschine (5) vorausfliegt, der Abstand der Flugbahn des unbemannten Luftfahrzeugs (12) zur aktuellen und/oder zukünftigen Fahrspur (2) der landwirtschaftlichen Arbeitsmaschine (5) vergrößert wird.

11. System zur Ausführung des in den Ansprüchen 1 bis 10 beschriebenen Verfahrens, umfassend eine landwirtschaftliche Arbeitsmaschine (5) und ein unbemanntes Luftfahrzeug (ULF) (12), wobei das unbemannte Luftfahrzeug (12) eine Einheit zum Empfangen von Steuersignalen von einer Basisstation und/oder Senden von Steuersignalen an das landwirtschaftliche Arbeitsgerät (5) und eine Einheit zur Übermittlung von erfassten Windverhältnissen (10) an die Basisstation und/oder an das landwirtschaftliche Arbeitsgerät (5) aufweist, **dadurch gekennzeichnet, dass** das unbemannte Luftfahrzeug (ULF) (12) mit Sensoren zur Erfassung von zumindest der Relativbewegung (14) von Windindikatoren (15) und/oder Windgeschwindigkeit(en) und/oder - richtung(en) ausgestattet ist, wobei eine datenverarbeitende Elektronik der landwirtschaftlichen Arbeitsmaschine (5) derart konfiguriert ist, dass Betriebsparameter der landwirtschaftlichen Arbeitsmaschine (5) auf die zum Zeitpunkt der Ausbringung am Ort der landwirtschaftlichen Arbeitsmaschine (5) vorherrschenden Windverhältnisse angepasst werden, auf Basis der vom unbemannten Luftfahrzeug erfassten Windverhältnisse.

12. System nach Anspruch 11, **dadurch gekennzeichnet, dass** das unbemannte Luftfahrzeug (ULF) (12) auf der landwirtschaftlichen Arbeitsmaschine (5) start- und landefähig ist.

13. System nach Anspruch 12, **dadurch gekennzeichnet, dass** die Kommunikation zwischen unbemanntem Luftfahrzeug (12) und Basisstation und/oder landwirtschaftlicher Arbeitsmaschine (5) drahtlos erfolgt.

14. System nach Anspruch 12 und/oder 13, **dadurch gekennzeichnet, dass** das unbemannte Luftfahrzeug (12) eine wieder auffüllbare und/oder austauschbare Energiespeichereinheit aufweist.

## Claims

1. Method for detecting the wind (10) during distributing processes in agriculture by means of a detection device of at least one preferably autonomously operating, unmanned aerial vehicle (UAV) (12) which is preferably capable of taking off and landing substantially perpendicularly, **characterized in that** the unmanned aerial vehicle (UAV) (12) has at least one unit for detecting wind conditions (10), which unmanned aerial vehicle has a unit for receiving control signals from a base station and/or sending control signals to an agricultural apparatus (5) and a unit for transmitting the detected wind conditions (10) to a base station and/or to an agricultural apparatus (5), the wind conditions (10) over an area (1) to be processed being detected by means of detecting wind indicators (15) and/or suitable sensors for detecting wind speed(s) and/or wind direction(s),
the unmanned aerial vehicle (12) detecting the wind conditions (10) on the windward side (19) of the current and/or future travel lane (2) and/or the agricultural machine (5); and
**in that** operating parameters of the agricultural machine (5) are adapted to the wind conditions prevailing at the location of the agricultural machine (5) at the time of deployment on the basis of the wind conditions detected by the unmanned aerial vehicle.

2. Method for detecting the wind (10) according to claim 1,
**characterized in that** the unmanned aircraft (12) detecting the wind conditions (10) is used at least predominantly on the windward side (19) of the current and/or future travel lane (2) and/or the agricultural machine (5).

3. Method for detecting the wind (10) according to claims 1 or 2,
**characterized in that** the wind conditions (10) are detected at least for a part of the area (1) to be processed before and/or during the processing operation.

4. Method for detecting the wind (10) according to at least one of claims 1 to 3, **characterized in that** a wind map of the wind conditions (10) is created above the area (1) to be processed.

5. Method for detecting the wind (10) according to at least one of claims 1 to 4, **characterized in that** the wind indicators (15) are designed as reference objects or particle clouds.

6. Method according to at least one of the preceding claims,
**characterized in that** the unmanned aerial vehicle (UAV) (12) detecting the wind conditions (10) is used on the leeward side (20) of the agricultural machine (5) when use on the windward side (19) is not possible.

7. Method according to at least one of the preceding claims,
**characterized in that** the falsification of the measured values of the wind conditions caused by the wind flow of the ego-motion of the UAV (12) is corrected on the basis of the known direction of movement and speed.

8. Method according to at least one of the preceding claims,
**characterized in that** artificial wind indicators (15), for example smoke or fog generators, are used and/or portable wind measuring systems are set up.

9. Method according to claim 8, **characterized in that** the artificial wind indicators (15) or portable wind measuring systems are applied and/or positioned by the unmanned aerial vehicle (12).

10. Method according to at least one of claims 1 to 8, **characterized in that** as the distance that the unmanned aerial vehicle (12) flies ahead of the agricultural machine (5) increases, the distance between the flight path of the unmanned aerial vehicle (12) and the current and/or future travel lane (2) of the agricultural machine (5) increases.

11. System for carrying out the method described in claims 1 to 10, comprising an agricultural machine (5) and an unmanned aerial vehicle (UAV) (12), the unmanned aerial vehicle (12) having a unit for receiving control signals from a base station and/or sending control signals to the agricultural apparatus (5) and a unit for transmitting detected wind conditions (10) to the base station and/or to the agricultural apparatus (5), **characterized in that** the unmanned aerial vehicle (UAV) (12) is equipped with sensors for detecting at least the relative movement (14) of wind indicators (15) and/or wind speed(s) and/or wind direction(s), data-processing electronics of the agricultural machine (5) being configured such that operating parameters of the agricultural machine (5) are adapted to the wind conditions prevailing at the location of the agricultural machine (5) at the time of deployment on the basis of the wind conditions detected by the unmanned aerial vehicle.

12. System according to claim 11, **characterized in that** the unmanned aerial vehicle (UAV) (12) is capable of taking off and landing on the agricultural machine (5).

13. System according to claim 12, **characterized in that** the communication between the unmanned aerial vehicle (12) and base station and/or agricultural machine (5) is wireless.

14. System according to claim 12 and/or 13, **characterized in that** the unmanned aerial vehicle (12) has a replenishable and/or replaceable energy storage unit.

## Revendications

1. Procédé pour la détection du vent (10) lors de processus d'épandage dans l'agriculture par un dispositif de détection d'au moins un aéronef sans équipage (ULF) (12) pouvant de préférence démarrer et atterrir de manière essentiellement verticale, agissant de préférence de manière autonome, **caractérisé en ce que** l'aéronef sans équipage (ULF) (12) présente au moins une unité destinée à détecter les conditions de vent (10), qui présente une unité destinée à recevoir des signaux de commande provenant d'une station de base et/ou à envoyer des signaux de commande à un outil de travail agricole (5) et une unité destinée à transmettre les conditions de vent (10) détectées à une station de base et/ou à un outil de travail agricole (5), les conditions de vent (10) étant détectées sur une surface à traiter (1) à l'aide de la détection d'indicateurs de vent (15) et/ou de capteurs appropriés pour détecter la/les vitesse(s) et/ou direction(s) du vent,
l'aéronef sans équipage (12) détectant les conditions de vent (10) sur le côté au vent (19) de la trajectoire (2) actuelle et/ou future et/ou de la machine de travail agricole (5) ; et
les paramètres de fonctionnement de la machine de travail agricole (5) étant adaptés aux conditions de vent régnant au moment de l'épandage sur le site de la machine de travail agricole (5), sur la base des conditions de vent détectées par l'aéronef sans équipage.

2. Procédé pour la détection du vent (10) selon la revendication 1, **caractérisé en ce que** l'aéronef sans équipage (12) détectant les conditions de vent (10) est utilisé au moins principalement sur le côté au vent (19) de la trajectoire (2) actuelle et/ou future et/ou de la machine de travail agricole (5).

3. Procédé pour la détection du vent (10) selon les revendications 1 ou 2, **caractérisé en ce que** les conditions de vent (10) sont détectées au moins pour une partie de la surface à traiter (1) avant et/ou pendant le processus de traitement.

4. Procédé pour la détection du vent (10) selon au moins l'une quelconque des revendications 1 à 3, **caractérisé en ce qu'**une carte des vents des conditions de vent (10) est établie sur la surface à traiter (1).

5. Procédé pour la détection du vent (10) selon au moins l'une quelconque des revendications 1 à 4, **caractérisé en ce que** les indicateurs de vent (15) sont conçus comme objets de référence ou nuages de particules.

6. Procédé selon au moins l'une quelconque des revendications précédentes, **caractérisé en ce que** l'aéronef sans équipage (ULF) (12) détectant les conditions de vent (10) est utilisé sur le côté sous le vent (20) de la machine de travail agricole (5) lorsque l'utilisation sur le côté au vent (19) n'est pas possible.

7. Procédé selon au moins l'une quelconque des revendications précédentes, **caractérisé en ce que** la distorsion des valeurs de mesure des conditions de vent, provoquée par le flux d'air propre au déplacement de l'ULF (12) est corrigée sur la base du sens et de la vitesse de déplacement connus.

8. Procédé selon au moins l'une quelconque des revendications précédentes, **caractérisé en ce que** des indicateurs de vent (15) artificiels, par exemple des générateurs de fumée ou de brume, sont utilisés et/ou des systèmes transportables de mesure de vent sont installés.

9. Procédé selon la revendication 8, **caractérisé en ce que** les indicateurs de vent (15) artificiels ou les systèmes transportables de mesure de vent sont épandus et/ou positionnés par l'aéronef sans équipage (12).

10. Procédé selon au moins l'une quelconque des revendications 1 à 8, **caractérisé en ce que,** lors d'un trajet ascendant, que l'aéronef sans équipage (12) survole devant la machine de travail agricole (5), la distance de la trajectoire de vol de l'aéronef sans équipage (12) par rapport à la trajectoire (2) réelle et/ou future de la machine de travail agricole (5) est agrandie.

11. Système pour la mise en oeuvre du procédé décrit dans les revendications 1 à 10, comprenant une machine de travail agricole (5) et un aéronef sans équipage (ULF) (12), l'aéronef sans équipage (12) présentant une unité destinée à recevoir des signaux de commande provenant d'une station de base et/ou à envoyer des signaux de commande à l'outil de travail agricole (5) et une unité destinée à la transmission de conditions de vent (10) détectées à la station de base et/ou à l'outil de travail agricole (5), **caractérisé en ce que** l'aéronef sans équipage (ULF) (12) est équipé de capteurs destinés à la détection au moins du déplacement relatif (14) d'indicateurs de vent (15) et/ou de vitesse(s) et/ou de direction(s) du vent, une électronique de traitement de données de la machine de travail agricole (5) étant configurée de manière telle que les paramètres de fonctionnement de la machine de travail agricole (5) sont adaptés aux conditions de vent qui règnent au moment de l'épandage sur le site de la machine de travail agricole (5), sur la base des conditions de vent détectées par l'aéronef sans équipage.

12. Système selon la revendication 11, **caractérisé en ce que** l'aéronef sans équipage (ULF) (12) peut démarrer et atterrir sur la machine de travail agricole (5).

13. Système selon la revendication 12, **caractérisé en ce que** la communication entre l'aéronef sans équipage (12) et la station de base et/ou la machine de travail agricole (5) s'effectue sans fil.

14. Système selon la revendication 12 et/ou 13, **caractérisé en ce que** l'aéronef sans équipage (12) présente une unité de stockage d'énergie rechargeable et/ou remplaçable.
